# EUROPEAN PATENT SPECIFICATION

(11) **EP 1 316 756 B1**
(45) Date of publication and mention of the grant of the patent: **14.01.2009**
(21) Application number: 02258056.7
(22) Date of filing: 22.11.2002
(51) Int. Cl.: F24C 3/04, F24C 3/08, F24C 3/12, F24C 15/10, F24C 15/32

(54) **Gas heater**
Gas-Heizgerät
Chauffage de gaz

(30) Priority: 29.11.2001 JP 2001363659
(43) Date of publication of application: 04.06.2003
(73) Proprietor: RINNAI KABUSHIKI KAISHA, Nagoya-shi, Aichi-ken (JP)
(72) Inventor: Sobue Tsutomu, Nakagawa-ku Nagoya-shi Aichi-ken (JP); Yano Koji, Nakagawa-ku Nagoya-shi Aichi-ken (JP); Yamada Yutaka, Minato-Ku Tokyo (JP)
(74) Representative: Fenlon, Christine Lesley

(56) References cited:
- EP-A- 0 601 270
- US-A- 3 843 313
- US-A- 4 083 355

## Description

The present invention relates to a gas heater for heating an object placed on an upper panel above a combustion chamber without exposing flames.

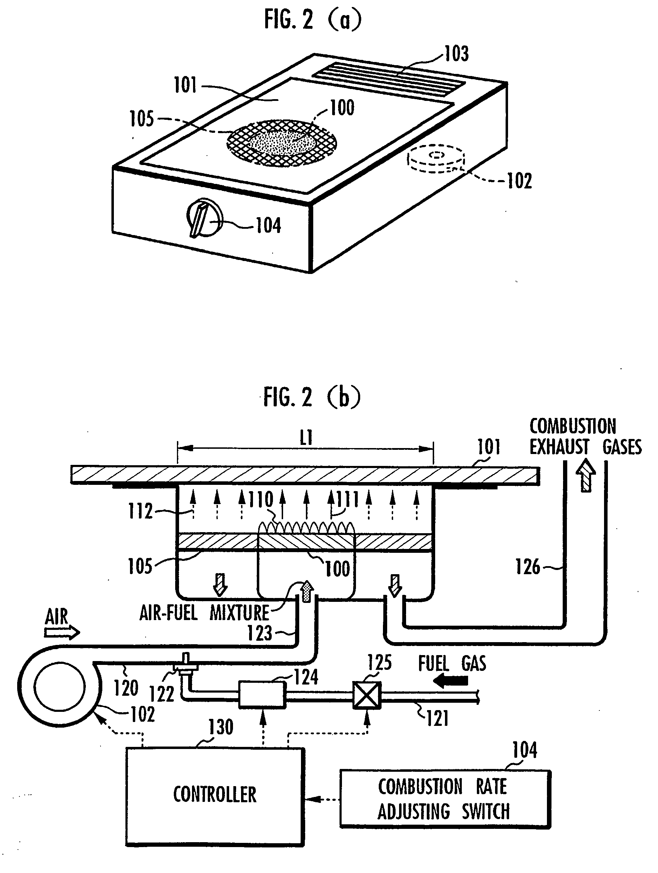

FIG. 2(a) of the accompanying drawings shows a previously considered gas heater having a combustion chamber which houses a burner 100 therein and a heat-resistant upper panel 101 of glass disposed above the combustion chamber. The gas heater heats an object that is placed on the upper panel 101 without exposing flames. An air supply/discharge fan 102 supplies combustion air to the burner 100, and a combustion gas from the burner 100 is discharged from an exhaust slot 103.

FIG. 2(b) of the accompanying drawings shows the previously considered gas heater in vertical cross section with some parts being illustrated in block form. As shown in FIG. 2(b), a controller 130 controls a gas proportional valve 124 to control the flow rate of a fuel gas that is supplied from a gas supply passage 121 through a nozzle 122 to a mixture pipe 123, according to a target combustion rate which is set for the burner 100 by a combustion rate adjusting switch 104 that adjusts the combustion rate of the burner 100. The controller 130 also controls the air supply/discharge fan 102 to control the flow rate of combustion air supplied through an air supply passage 120 to the mixture pipe 123.

The gas supply passage 121 has a main gas valve 125 at its end connected to the mixture pipe 123. An air-permeable porous body 105 is disposed outside of the burner 100 and communicates with an exhaust passage 126 which delivers combustion exhaust gases from the burner 100 to the exhaust slot 103. When the burner 100 is in operation, it generates heat 111 from its combustion surface due to combustion flames 110 that are produced by the combustion of the fuel gas, and the porous body 105 also generates radiant heat 112 as it is heated by the high-temperature combustion exhaust gases as they pass through the porous body 105. Therefore, the gas burner has a high thermal efficiency.

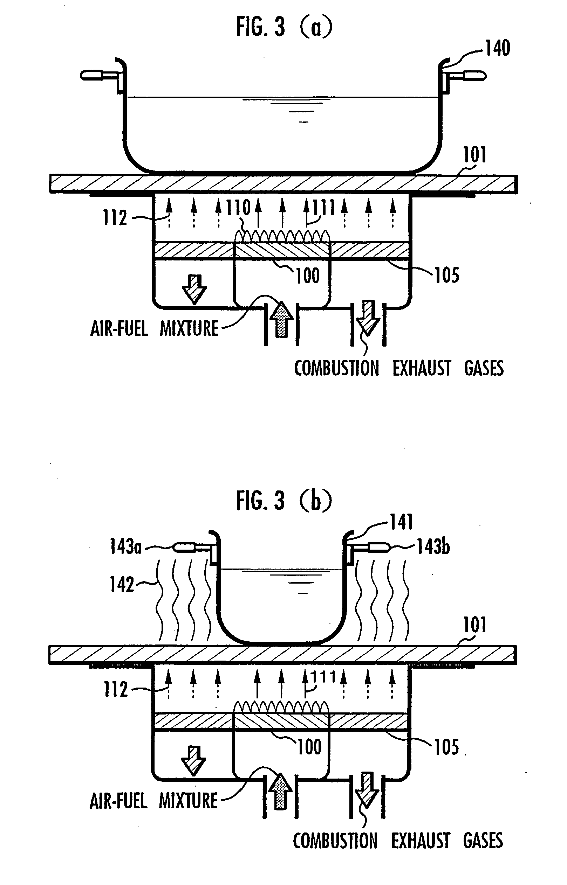

As shown in FIG. 3(a) of the accompanying drawings, when a pan 140 having a bottom area greater than the effective heating area (within a circle having a diameter L1, see FIG. 2(b)) of the upper panel 101 is heated by the gas heater, the pan 140 can efficiently be heated by heat energy radiated from the burner 100 and the porous body 105.

However, as shown in FIG. 3(b) of the accompanying drawings, when a pan 141 having a bottom area smaller than the effective heating area of the upper panel 101 is heated by the gas heater, heat 142 from the porous body 105 is radiated into a space around the pan 141. At this time, the heat is partly radiated wastefully, lowering the thermal efficiency of the gas heater, and the heat energy radiated into the space around the pan 141 tends to make the cooker uncomfortable and heat handles 143a, 143b of the pan 141 to the extent that the cooker finds it hard to hold the handles 143a, 143b.

A similar gas heater is disclosed in documents EP 06 01 270 A1, US 4 083 355 A and US 3 843 313 A.

Preferred embodiments of the present invention seek to provide a gas heater which is capable of heating objects of different sizes with good thermal efficiency.

Embodiments of the present invention are concerned with an improvement over a gas heater having a combustion chamber with an upper panel disposed thereabove for placing an object to be heated thereon, a surface-combustion burner and an air-permeable porous body disposed in said combustion chamber in confronting relation to the upper panel, a fuel gas supply means for supplying a fuel gas to the burner, an exhaust passage having an end communicating with the combustion chamber through said porous body and an opposite end communicating with an exhaust slot, and an air supply/discharge fan for supplying combustion air to said burner and delivering combustion exhaust gases from said burner through said porous body and said exhaust passage to said exhaust slot. The object on said upper panel can be heated by heat radiated from said burner and heat radiated from said porous body which is heated by the combustion exhaust gases from said burner.

According to a preferred embodiment of the present invention, the porous body comprises a plurality of endless porous body blocks of different sizes disposed around said burner, said sizes of the endless porous body blocks being progressively smaller toward said burner, and the gas heater has a porous body block combustion switching means for individually switching the porous body blocks other than the porous body block which is disposed in an innermost position into and out of communication with said exhaust passage, and an effective heating area changing means for increasing an effective heating area on said upper panel by progressively increasing the number of porous body blocks to be switched into communication with said exhaust passage outwardly from an innermost one of the porous body blocks, and reducing the effective heating area on said upper panel by progressively reducing the number of porous body blocks to be brought out of communication with said exhaust passage inwardly toward an outermost one of the porous body blocks.

With the above arrangement, the number of porous body blocks to be heated by the combustion exhaust gases from the burner is changed by the effective heating area changing means for thereby increasing or reducing the effective heating area on the upper panel depending on the bottom area of the object to be heated which is placed on the upper panel above the combustion chamber. Therefore, the heat contained in the combustion exhaust gases from the burner can be utilized efficiently to heat the object on the upper panel. The object on the upper panel is heated at its entire bottom area and hence is prevented from being heated irregularly. The space around the object on the upper panel is also prevented from being unduly heated.

For a better understanding of the present invention, and to show how the same may be carried into effect, reference will now be made, by way of example, to the accompanying drawings, in which:
FIG. 1(a) is a perspective view of a gas heater according to an embodiment of the present invention;
FIG. 1(b) is a vertical cross-sectional view, partly in block form, of the gas heater shown in FIG. 1(a);
FIG. 2(a) is a perspective view of a previously considered gas heater;
FIG. 2(b) is a vertical cross-sectional view, partly in block form, of the previously considered gas heater shown in FIG. 2(a); and
FIGS. 3(a) and 3(b) are vertical cross-sectional views illustrating the manner in which the previously considered gas heater is used.

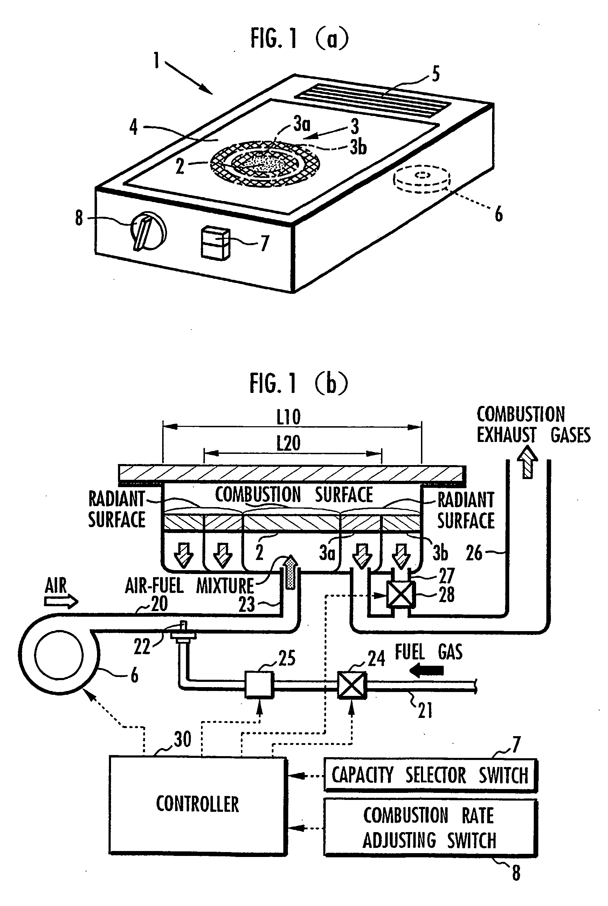

As shown in FIG. 1(a), a gas heater 1 has a surface-combustion burner 2 and an air-permeable porous body 3 which are disposed in a combustion chamber and a heat-resistant upper panel 4 of glass disposed above the combustion chamber. The porous body 3 comprises an annular porous body block 3a and an annular porous body block 3b disposed around the annular porous body block 3a. The gas heater 1 heats an object that is placed on the upper panel 4 without exposing flames.

The gas heater 1 also has an air supply/discharge fan 6 for supplying combustion air to the burner 2 and delivering combustion exhaust gases from the burner 2 through the porous body 3 and an exhaust passage 26 (see FIG. 1(b)) into an exhaust slot 5, a capacity selector switch 7 for changing effective heating areas of the upper panel 4, and a combustion rate adjusting switch 8 for adjusting the combustion rate of the burner 2.

FIG. 1(b) shows in vertical cross section the gas heater 1 illustrated in FIG. 1(a). As shown in FIG. 1(b), the burner 2 is supplied with combustion air through an air supply passage 20 from the air supply/discharge fan 6, and the air supply passage 20 is supplied with a fuel gas from a nozzle 22 mounted on the end of a gas supply pipe 21. The fuel gas and the combustion air are mixed with each other in a mixture pipe 23 connected to the air supply passage 20. The mixture is supplied through the mixture pipe 23 into the burner 2. The gas supply pipe 21 has a main gas valve 24 and a gas proportional valve 25 which are successively disposed in the order named from its upstream end. The gas supply pipe 21 and the nozzle 22 make up a fuel gas supply means according to the present invention.

The combustion exhaust gases from the burner 2 are discharged by the air supply/discharge fan 6 through the exhaust passage 26 into the exhaust slot 5. The porous body block 3b communicates with the exhaust passage 26 through an intermediary exhaust pipe 27 which has an exhaust pipe opening/closing valve 28 for selectively opening and closing the intermediary exhaust pipe 27. The exhaust pipe opening/closing valve 28 corresponds to a porous body block switching means according to the present invention.

The gas heater 1 is controlled in operation by a controller 30 whose functions include a function as an effective heating area changing means according to the present invention. The controller 30 may comprise a microcomputer or the like. The capacity selector switch 7 and the combustion rate adjusting switch 8 are connected to the controller 30. The controller 30 controls a combustion process carried out by the burner 2 and an exhaust route for the combustion exhaust gases from the burner 2 depending on user's actions on the capacity selector switch 7 and the combustion rate adjusting switch 8.

After the burner 2 starts burning the fuel gas according to a user's action on the combustion rate adjusting switch 8, when the user shifts the capacity selector switch 7 to a "high capacity" position, the controller 30 opens the exhaust pipe opening/closing valve 28. Since the porous body block 3b communicates with the exhaust passage 26 through the intermediary exhaust pipe 27, the combustion exhaust gases from the burner 2 are discharged into the exhaust passage 26 through both the porous body block 3a and the porous body block 3b.

As the high-temperature combustion exhaust gases produced by the burner 2 pass through the porous body block 3a and the porous body block 3b, the porous body block 3a and the porous body block 3b are heated and become red hot, and discharge radiant heat. Therefore, the upper panel 4 provides an effective heating area which is located within a circle having a diameter L10 that is covered by the combustion surface of the burner 2 and the heat radiating surfaces of the porous body blocks 3a, 3b.

When the user shifts the capacity selector switch 7 to a "low capacity" position, the controller 30 closes the exhaust pipe opening/closing valve 28. Because the porous body block 3b is disconnected from the exhaust pipe 26, the combustion exhaust gases from the burner 2 are discharged through only the porous body block 3a. Therefore, only the porous body block 3a is heated by the combustion exhaust gases from the burner 2 and becomes red hot, and discharges radiant heat. As a result, the upper panel 4 provides an effective heating area which is located within a circle having a diameter L20 that is covered by the combustion surface of the burner 2 and the heat radiating surface of the porous body block 3a.

The cooker who uses the gas heater can select one of the above effective heating areas on the upper panel 4 depending on the size of a cooking utensil to be heated, e.g., a pan, by operating the capacity selector switch 7. Therefore, the heat contained in the combustion exhaust gases from the burner 2 can be utilized efficiently to heat contents of the cooking utensil on the upper panel 4. The cooking utensil is prevented from being heated only at a central portion thereof thereby to prevent the contents of the cooking utensil from being heated irregularly. Since no extra heat is radiated into the space around the cooling utensil, the cooker is not made uncomfortable and handles of the cooking utensil are prevented from being unduly heated while the cooking utensil is being heated by the gas heater.

Depending on the user's action on the capacity selector switch 7 and the combustion rate adjusting switch 8, the controller 30 sets a target combustion rate for the burner 2. Based on the target combustion rate thus set, the controller 30 adjusts the rotational speed of the air supply/discharge fan 6 to control the flow rate of combustion air supplied to the burner 2 and also adjusts the opening of the gas proportional valve 25 to control the flow rate of the fuel gas supplied to the burner 2.

In the illustrated embodiment, the gas heater 1 has the burner 2 constructed of the two annular porous body blocks 3a, 3b having different diameters which are disposed around the burner 3. However, the principles of the present invention are also applicable to a gas heater having a burner constructed of three or more annular porous body blocks having different diameters which are disposed around a burner, the diameters of the annular porous body blocks being progressively smaller toward the burner.

According to the above modification, the number of porous body blocks to communicate with the exhaust passage is progressively increased from the innermost porous body block toward the outermost porous body block for progressively increasing the effective heating area on the upper panel 4. Alternatively, the number of porous body blocks to communicate with the exhaust passage is progressively reduced from the outermost porous body block toward the innermost porous body block for progressively reducing the effective heating area on the upper panel 4.

In the illustrated embodiment, the porous body 3 is comprised of the annular porous body blocks 3a, 3b. However, the porous body blocks are not limited to the annular shape, but may be of any shape insofar as they are endless and allow a burner to be disposed therein.

Although a certain preferred embodiment of the present invention has been shown and described in detail, it should be understood that various changes and modifications may be made therein without departing from the scope of the appended claims.

## Claims

1. A gas heater (1) comprising:
a combustion chamber with an upper panel (4) disposed thereabove for placing an object to be heated thereon;
a surface-combustion burner (2) and an air-permeable porous body (3a, 3b) disposed in said combustion chamber in confronting relation to the upper panel (4);
fuel gas supply means (20, 23, 21, 22) for supplying a fuel gas to the burner (2);
an exhaust passage having an end communicating with the combustion chamber through said porous body (3a, 3b) and an opposite end communicating with an exhaust slot;
an air supply/discharge fan (6) for supplying combustion air to said burner (2) and delivering combustion exhaust gases from said burner through said porous body (3a, 3b) and said exhaust passage to said exhaust slot, whereby the object on said upper panel (4) can be heated by heat radiated from said burner (2) and heat radiated from said porous body (3a, 3b) which is heated by the combustion exhaust gases from said burner (2);
said porous body (3a, 3b) comprising a plurality of end-less porous body block (3a, 3b) of different sizes disposed around said burner (2), said sizes of the endless porous body blocks (3a, 3b) being progressively smaller toward said burner (2);
**characterized in that** it further comprises:
porous body block (3a, 3b) combustion switching means (2) for individually switching the porous body blocks (3b) other than the porous body block (3a) which is disposed in an innermost position into and out of communication with said exhaust passage; and
effective heating area changing means for increasing an effective heating area on said upper panel (4) by progressively increasing the number of porous body blocks (3a, 3b) to be switched into communication with said exhaust passage outwardly from an innermost one of the porous body blocks (3a, 3b), and reducing the effective heating area on said upper panel (4) by progressively reducing the number of porous body blocks (3a, 3b) to be brought out of communication with said exhaust passage inwardly toward an outermost one of the porous body blocks (3b).

## Patentansprüche

1. Gasofen (1), umfassend
eine Brennkammer mit einer oberen Platte (4), die darüber angeordnet ist, um ein zu erhitzendes Objekt darauf zu platzieren;
einen Oberflächenbrenner (2) und einen luftdurchlässigen, porösen Körper (3a, 3b), der in der Brennkammer in gegenüberliegender Beziehung zu der oberen Platte (4) angeordnet ist;
Brenngaszuleitungsmittel (20, 23, 21, 22) zum Zuleiten eines Brenngases zu dem Brenner (2);
einen Abgasdurchgang mit einem mit der Brennkammer durch den porösen Körper (3a, 3b) verbundenen Ende und einem gegenüberliegenden Ende, das mit einem Abgasschlitz verbunden ist;
ein Luft zu-/abführendes Gebläse (6) zum Zuführen von Verbrennungsluft zu dem Brenner (2) und Transportieren von Verbrennungsabgasen von dem Brenner (2) durch den porösen Körper (3a, 3b) und den Abgasdurchgang zu dem Abgasschlitz, wodurch das auf der oberen Platte (4) befindliche Objekt durch von dem Brenner (2) abgestrahlte Wärme und von dem porösen Körper (3a, 3b) abgestrahlte Wärme, der durch die Verbrennungsabgase von dem Brenner (2) erhitzt wird, erhitzt werden kann;
wobei der poröse Körper (3a, 3b) eine Mehrzahl von endlosen porösen Körperblocks (3a, 3b) verschiedener Größen umfasst, die um den Brenner (2) herum angeordnet sind, wobei die Größen der endlosen porösen Körperblocks (3a, 3b) progressiv in Richtung des Brenners (2) kleiner sind;
**dadurch gekennzeichnet, dass** er ferner
ein Verbrennungsschaltmittel (7) für den porösen Körperblock (3a, 3b) zum individuellen Schalten der porösen Körperblocks (3b) getrennt von dem porösen Körperblock (3a), der in einer innersten Position angeordnet ist, in und außer Verbindung mit dem Abgasdurchgang; und
Veränderungsmittel für eine effektive Heizfläche zum Erhöhen einer effektiven Heizfläche auf der oberen Platte (4) durch progressives Erhöhen der Anzahl poröser Körperblocks (3a, 3b), die in Verbindung mit dem Abgasdurchgang nach Außen von einem innersten der porösen Körperblocks (3a, 3b) zu schalten sind, und Verringern der effektiven Heizfläche auf der oberen Platte (4) durch progressives Verringern der Anzahl von porösen Körperblocks (3a, 3b) umfasst, die außer Verbindung mit dem Abgasdurchgang nach innen in Richtung eines äußersten der porösen Körperblocks (3b) zu bringen sind.

## Revendications

1. Appareil de chauffage au gaz (1) comprenant :
une chambre de combustion avec un panneau supérieur (4) disposé au-dessus de celle-ci pour placer un objet destiné à être chauffé sur celuici ;
un brûleur de combustion de surface (2) et un corps poreux perméable à l'air (3a, 3b) disposé dans ladite chambre de combustion dans une relation face-à-face par rapport au panneau supérieur (9) ;
des moyens d'alimentation en gaz combustible (20, 23, 21, 22) pour distribuer un gaz combustible au brûleur (2) ;
un passage d'échappement possédant une extrémité communiquant avec la chambre de combustion par l'intermédiaire dudit corps poreux (3a, 3b) et une extrémité opposée communiquant avec une fente d'échappement ;
un ventilateur d'alimentation en air/d'évacuation d'air (6) pour fournir de l'air de combustion audit brûleur (2) et distribuer des gaz d'échappement de combustion à partir dudit brûleur (2) par l'intermédiaire dudit corps poreux (3a, 3b) et dudit passage d'échappement à ladite fente d'échappement, moyennant quoi l'objet sur ledit panneau supérieur (4) peut être chauffé par la chaleur rayonnant à partir dudit brûleur (2) et la chaleur rayonnant à partir dudit corps poreux (3a, 3b) qui est chauffé par les gaz d'échappement de combustion dudit brûleur (2) ;
ledit corps poreux (3a, 3b) comprenant une pluralité de blocs de corps poreux sans fin (3a, 3b) de tailles différentes disposés autour dudit brûleur (2), lesdites tailles des blocs de corps poreux sans fin (3a, 3b) étant de plus en plus petites vers ledit brûleur (2) ;
**caractérisé en ce qu'**il comprend en outre :
des moyens de commutation de combustion (7) de blocs de corps poreux (3a, 3b) pour commuter individuellement les blocs de corps poreux (3b) autres que le bloc de corps poreux (3a) qui est disposé dans une position la plus intérieure en et hors de communication avec ledit passage d'échappement ; et
des moyens de changement de surface de chauffage utile pour augmenter une surface de chauffage utile sur ledit panneau supérieur (4) en augmentant progressivement le nombre de blocs de corps poreux (3a, 3b) destinés à être commutés en communication avec ledit passage d'échappement vers l'extérieur d'un bloc le plus intérieur parmi les blocs de corps poreux (3a, 3b), et réduire la surface de chauffage utile sur ledit panneau supérieur (4) en réduisant progressivement le nombre de blocs de corps poreux (3a, 3b) destinés à être mis hors de communication avec ledit passage d'échappement vers l'intérieur vers un bloc le plus extérieur parmi lesdits blocs de corps poreux (3b).
